# EUROPEAN PATENT SPECIFICATION

(11) **EP 3 907 197 B1**
(45) Date of publication and mention of the grant of the patent: **13.12.2023**
(21) Application number: 21171424.1
(22) Date of filing: 30.04.2021
(51) Int. Cl.: C03B 7/02, C03C 1/00, C03C 1/10, C03C 3/091, C03B 5/00

(54) **METHOD FOR PRODUCING A GLASS CONTAINER**
VERFAHREN ZUR HERSTELLUNG EINES GLASBEHÄLTERS
PROCÉDÉ DE FABRICATION D'UN RÉCIPIENT EN VERRE

(30) Priority: 04.05.2020 IT 202000009766
(43) Date of publication of application: 10.11.2021
(73) Proprietor: Bormioli Luigi S.p.A., 43122 Parma (IT)
(72) Inventor: FAVA, Emanuela, 43126 PARMA (PR) (IT)
(74) Representative: Marturano, Pasqualino

(56) References cited:
- KR-A- 20070 049 288
- US-A- 3 482 955

## Description

### Field of the invention

The present invention concerns a method for producing glass containers. In particular, the present invention concerns a method for producing a glass container using recycled glass cullet, especially post-consumer glass cullet (so-called PCR cullet).

### Background of the Invention

As is known, the cycle for producing a glass container essentially comprises the steps of: melting a solid vitrifiable mixture to obtain a melted mass; forming the melted mass to obtain the glass container; annealing the glass container and final finishing.

The solid vitrifiable mixture is melted in melting furnaces, generally operating continuously, to which the components of the mixture are automatically fed. The mixture comprises virgin raw materials in powder and additive materials (fluxes, stabilizing agents, colorizing agents, decolorizing agents, refining agents, oxidizing agents, reducing agents, etc.).

The liquid vitrifiable mixture obtained by melting passes from the tank of the melting furnace to a refining area (*refiner*) - generally located inside the same furnace - and from this, through a series of feeding channels (*forehearth*), also called thermal conditioning channels, to a respective series of forming machines, each of which can produce a final product with different shape. The container leaving the forming machine is subjected to an annealing heat treatment to eliminate the tensions that are generated in the glass during forming. Finally, in the finishing step, the container finishing operations are carried out (cutting, decoration, etc.).

In the glass container production field there is a constant commitment to use recycled glass cullet as a replacement, at least partially, of the virgin raw materials fed to the melting step.

A common practice, for example, is the recovery of glass cullet generated in glass production plants, such as for example the products discarded for lack of quality requirements, production scraps, etc.. This glass cullet, also defined as post-industrial recycled cullet or PIR cullet, can come from the same production plant in which it is recycled (internal PIR cullet) or from plants other than the one in which it is recycled (external PIR cullet).

In the attempt to further reduce the consumption of raw materials and energy, in the processes for producing glass containers, it is also known to recycle the glass cullet coming from the sorting of municipal waste, generally referred to as post-consumer recycled cullet or PCR cullet.

The PCR cullet is advantageously recycled in plants for the production of coloured glass containers (e.g. green, brown or amber glass), where it can also be used in high amounts, for example even as high as 600 - 80% by weight of the vitrifiable mixture subjected to melting.

In the case of the production of containers for perfumery, cosmetics and the food sector, where a white and highly transparent glass is required, the recycling of PCR cullet, on the other hand, presents some critical issues that severely limit its reuse and therefore the possibility of marketing products that are more sustainable from an environmental point of view and that satisfy the concepts of the circular economy.

The PCR cullet consists, in fact, of a mixture of coloured glass and white glass having a very variable chemical composition and, in any case, substantially different from that of the glass used to manufacture the aforesaid type of containers. In particular, the PCR cullet is characterized by the presence of high concentrations of colorizing compounds, especially iron and chromium oxides, which convey a yellow-green colour to the final container if they are introduced into the solid vitrifiable mixture subjected to melting.

This unwanted colour change can be controlled by adding glass decolorizing agents (e.g. Se, Co or Er based compounds) to the solid vitrifiable mixture subjected to melting. The use of certain decolorizing compounds (e.g. rare earth oxides), however, in addition to reducing the environmental sustainability of the glass products obtained, negatively affects the transparency of the glass if added in large amounts. Furthermore, the control of the colour of the glass by means of decolorizing compounds must take into account the variations in composition among the different batches of PCR cullet used; this implies the need to constantly monitor the chemical composition of the glass during the production cycle.

An example of a process in which PCR cullet is used together with virgin raw materials for producing glass containers for perfumery and cosmetics sector is described in EP 3252021 A1.

A further criticality that limits the recycling of PCR cullet in the processes for producing glass containers is represented by the fact that, generally, a plurality of forming machines receive the melted glass mass fed from a single melting furnace. Therefore, if PCR cullet is fed in the solid vitrifiable mixture subjected to melting, the final containers coming out of the forming machines are made of a glass having the same content of recycled raw material, since it is not possible to feed to each machine a melted glass mass with a predetermined and different content of PCR cullet.

US3482955 A teaches the distribution of a decoloring frit to a glass furnace forehearth. The glass is used to form bottles.

The impossibility of producing containers with different contents and types of recycled material represents an important technical constraint, which limits the flexibility of a production plant and prevents it from promptly satisfying market demands. Currently, this constraint appears to be overcome only by installing a plurality of melting furnaces, into each of which a vitrifiable mixture containing a different proportion of PCR cullet is fed. This solution, however, is obviously difficult as to practical feasibility due to the plant costs it entails.

### Summary of the invention

In consideration of the aforesaid state of the art, the Applicant has set himself the primary objective of providing a method for producing glass containers which overcomes, at least in part, the drawbacks of the state of the art.

In particular, a specific object of the present invention is to provide a method for producing, using different forming machines fed by a same melting furnace, glass containers having a different content of recycled glass cullet, particularly PCR cullet, i.e. containers made using melted glass that incorporate different proportions of glass cullet.

A second object of the present invention is to provide a method for producing glass containers, in particular for cosmetics and perfumery, which allows recovering and recycling glass cullet, so as to be more sustainable from an environmental point of view and respectful of the concepts of circular economy.

A further object of the present invention is to provide a method for producing glass containers that uses recycled glass cullet, particularly post-consumer glass cullet, as partial replacement of glass forming virgin raw materials.

The Applicant has now found that this object and others, which will be better illustrated hereinafter, can be achieved by dosing a glass cullet, in particular a PCR cullet, in the form of a frit in the single feeding channels in which the liquid vitrifiable mixture flows from the melting furnace and which is fed to the forming machines.

The glass cullet is preliminarily converted into a recycled glass frit (hereinafter also referred to as frit only), that is a finely divided glass substance (e.g. granules or flakes) having a lower melting point than that of the starting glass cullet; the frit is then incorporated and homogenized in the melted vitrifiable mixture which flows in the feeding channels.

According to a first aspect, therefore, the present invention concerns a method for producing glass containers comprising the steps of:
a. melting a first solid vitrifiable mixture to obtain a first melted vitrifiable mixture;
b. feeding the first melted vitrifiable mixture to a plurality of glass container forming machines through respective feeding channels;
c. combining at least one recycled glass frit with the first melted vitrifiable mixture in at least one of the feeding channels, the frit being obtained from a second solid vitrifiable mixture comprising recycled glass cullet and at least one fluxing agent;
d. forming a glass container in said forming machines using the melted vitrifiable mixture coming from step c.

The recycled glass frit can be easily obtained by melting a solid vitrifiable mixture comprising glass cullet and at least one fluxing agent and subjecting the melted mixture to quick cooling.

In one embodiment, the solid vitrifiable mixture used for preparing the frit may also contain a glass decolorizing compound to compensate for any colouring imparted by the addition of the recycled glass frit in the melted vitrifiable mixture.

In another embodiment, the decolorizing agent can also be introduced in the melted vitrifiable mixture that flows in the feeding channel in the form of a glass frit containing it, other than the recycled glass frit.

Further characteristics of the process according to the present invention are defined in the dependent claims 2-12.

The addition of the glass cullet in the form of a frit in one or more feeding channels allows the single forming machines to be fed with a melted vitrifiable mixture having a different and predetermined content of glass cullet. With the method described here, it is also possible to feed into the feeding channels frits of recycled glass having chemical compositions that are different from one another. The method according to the present description therefore increases the versatility of a glass container production plant, allowing a wider variety of recycled glass containers to be produced with the same melting furnace. The method also makes it possible to reduce the preparation times of a specific product batch, improving the capability of a plant to quickly meet market demands. Furthermore, the products manufactured, being obtained from the recovery and recycling of waste material, meet the criteria of environmental sustainability and circular economy that are increasingly important for the market.

### Detailed description of the invention

The characteristics and advantages of the method according to the present invention will become more evident from the following description. The description and the following examples of embodiment are provided for the sole purpose of illustrating the present invention and are not to be understood in a sense limiting the scope of protection defined by the appended claims.

The compositions according to the present invention may "comprise", "consist of" or "consist essentially of" the essential and optional components described in the present description and in the appended claims.

For the purposes of the present description and the appended claims, the term "consist essentially of" means that the composition or the component may include additional ingredients, but only to the extent that the additional ingredients do not materially alter the essential characteristics of the composition or component.

In accordance with the present invention, the method comprises a step of melting a first solid vitrifiable mixture to obtain a melted glass to be fed to the glass container forming machines.

The composition of the first solid vitrifiable mixture is of the type known to the person skilled in the art. Preferably, the first vitrifiable mixture is a mixture suitable for obtaining a soda-lime glass. For example, the first solid vitrifiable mixture comprises at least quartz sand (SiO₂), sodium carbonate and calcium carbonate. The first solid vitrifiable mixture may further include one or more additive materials to give the glass the desired aesthetic and physical-chemical properties. Examples of additive materials are: additional vitrifying compounds (or glass formers), stabilizing agents, colorizing agents, decolorizing agents, oxidizing agents, reducing agents and refining agents.

The first solid vitrifiable mixture also contains preferably post-industrial recycled glass cullet (PIR cullet).

In one embodiment, the first solid vitrifiable mixture may also contain post-consumer recycled glass cullet (PCR cullet) in addition to the PCR cullet introduced in the form of a frit in the feeding channels of the forming machines. The first solid vitrifiable mixture may also contain post-industrial recycled glass cullet (PIR cullet).

As used in the present description, the term *glass cullet* indicates a material formed by fragments of glass products or products containing glass.

The term "recycled glass cullet" refer to glass cullet derived from post-consumer and post-industrial waste or scrap glass products.

The terms "recycled glass cullet", "PCR glass cullet" and "PCR cullet" preferably comprise the glass cullet derived from glass containers, for example for packaging food, cosmetic or perfumery products, which are generally sorted in municipal waste in order to be recycled, typically after one or more pre-treatment steps (e.g. washing, grinding, selection based on colour and size, etc.).

The terms "post-industrial recycled cullet" and "PIR cullet" preferably refer to glass waste generated during an industrial glass production cycle (e.g. products discarded for lack of the required quality requirements, production scraps, etc.).

The first solid vitrifiable mixture can be melted in a melting furnace, for example a tank furnace with automatic loading of the components of the mixture. In the melting furnace, the first melted vitrifiable mixture is generally kept at a temperature within the range 1,400°C - 1,500°C.

In the following, the first melted vitrifiable mixture in which the recycled glass frit is incorporated in the feeding channels of the forming machines is also called base melted glass.

The liquid glass mass produced in the melting furnace is then transferred to a refining tank, where the gases present therein are removed and the residues remained undissolved are eliminated. From the refining tank, the first melted vitrifiable mixture is transferred to a distribution channel and from there distributed into a plurality of feeding channels, each of which conveys the first melted vitrifiable mixture to a respective forming machine. In the feeding channels, the temperature of the first melted vitrifiable mixture is kept, for example, within the range 1,000°C - 1,250°C.

According to requirements, the recycled glass frit can be incorporated in the mass of the first vitrifiable mixture melted inside one or more feeding channels or in one or more points of the same channel.

The frit can be prepared substantially by any of the frit manufacturing processes known in the art. In general, the frit is obtained by a process that includes preparing and melting a second solid vitrifiable mixture, comprising the glass cullet and at least one fluxing agent, at a temperature above 1,000°C, followed by quick cooling to obtain a new solid glass substance.

The recycled glass cullet used for the preparation of the frit preferably includes PCR cullet and/or PIR cullet, more preferably at least PCR cullet. In one embodiment the frit does not include PIR cullet.

In one embodiment, the second solid vitrifiable mixture used for preparing the frit comprises recycled glass cullet in an amount within the range 500 - 90% by weight, preferably 600 - 80% by weight, with respect to the weight of the solid vitrifiable mixture, the complement to 100% by weight being the fluxing agent and optional additive materials.

In the second solid vitrifiable mixture, the glass cullet is therefore the main vitrifying material (*glass-forming material*), i.e. the material from which the frit mainly derives its oxide content, in particular SiO₂, Na₂O and CaO.

Preferably, the glass cullet usable for preparing the frit has fragments with dimensions within the range 5 mm - 50 mm. Preferably, the glass cullet has a content equal to or lower than 1% by weight of fragments with dimensions greater than 50 mm. Preferably, the glass cullet has a content of fragments with dimensions lower than 5 mm equal to or lower than 5% by weight.

The aforementioned grain size of the glass cullet favours the melting thereof and therefore the transformation thereof into frit.

In one embodiment, the glass cullet used is a so-called "extra-flint" quality PCR cullet, i.e. a mixture of white and half-white soda-lime glass cullet.

The term "white glass cullet" indicates a colourless and transparent glass cullet having a Fe₂O₃ content between 0.020% and 0.070% by weight.

The term "half-white glass cullet" indicates a relatively colourless and transparent glass having a Fe₂O₃ content greater than 0.070% by weight and lower than 0.15% by weight.

Preferably, the glass cullet has a Cr₂O₃ content within the range 0.0005% - 0.0020% by weight.

The second solid vitrifiable mixture for producing the recycled glass frit comprises at least one fluxing agent (also called flux). The function of the fluxing agent is to lower the melting temperature of the frit with respect to the melting temperature of the glass cullet used to manufacture it.

The fluxing agents that can be used are the compounds commonly used for producing glass and frits.

Examples of such compounds are:
- boric anhydride (B₂O₃), generally in the form of anhydrous borax;
- alkali metal oxides, preferably Li, Na and K oxides; (e.g. Na₂O, K₂O);
- carbonate salts of alkali metals, preferably carbonate salts of Li, Na and K (Li₂CO₃, Na₂CO₃, K₂CO₃) .

The fluxing agent can also be a mixture of the above compounds.

In one embodiment, the second solid vitrifiable mixture used for preparing the frit comprises at least one fluxing agent in an amount within the range 10% - 50%, preferably 150 - 40%, more preferably 150 - 30%, by weight with respect to the weight of the solid vitrifiable mixture.

The second solid vitrifiable mixture for producing the frit can also comprise one or more additional additive materials, selected for example from: vitrifying agents (e.g. Al₂O₃ or B₂O₃), stabilizing agents (e.g. CaO, MgO, BaO, etc.), colorizing agents (e.g. iron oxides, chromium oxides, cobalt oxides, metals such as Ni, Cu, Se, Mn, Ti), decolorizing agents, oxidizing agents (e.g. NaNO₃, KNO₃), reducing agents (e.g. graphite, pyrite, carbon) and refining agents (e.g. Na₂SO₄, antimony oxide) and mixtures thereof. These additive materials can also be used for preparing the solid vitrifiable mixture used to produce the base melted glass.

Some compounds, as known, can have more than one function among those indicated above (e.g. B₂O₃ can act as a vitrifying, fluxing and stabilizing agent).

Preferably, the optional additive materials are present in the solid vitrifiable mixture used for preparing the frit in an amount within the range 0% - 15%, preferably 0.50 - 15%, more preferably 0.50 - 50, by weight with respect to the weight of the solid vitrifiable mixture.

The introduction of the glass cullet in the form of a frit into the base melted glass can impart an undesirable colouring to the glass, tending to yellow-green, due to the content of colorizing agents originally present in the cullet. In such a case, if it is desired to obtain a white glass container, it is preferable to incorporate at least one glass decolorizing compound into the mass of the base melted glass.

For this purpose, for example, the decolorizing compounds known to those skilled in the art, commonly used in glass manufacturing processes, can be used.

Preferably, the decolorizing compound is selected from:
- oxides of one or more of the following elements: Co, Ce, Er, Mn;
- a metal selected from: selenium, manganese;
- mixtures of the above compounds.

Preferably, the decolorizing compound is added to the solid vitrifiable mixture for preparing the frit in an overall amount by weight within the range 1 ppm - 2,000 ppm, more preferably within the range 1 ppm - 500 ppm, with respect to the weight of the solid vitrifiable mixture.

The aforesaid oxides and metals with a decolorizing function can also be used in a mixture with each other.

In one embodiment, the glass decolorizing compound can be mixed in the first melted vitrifiable mixture that flows in the feeding channel in the form of a glass frit containing it, other than the recycled glass frit. The addition of the decolorizing agent to the base melted glass by means of a frit separated from the recycled glass frit allows the obtained decolorizing effect to be noted more quickly, thus increasing the capability of controlling the process.

Furthermore, the addition of the decolorizing agent in the feeding channel into which the recycled glass frit is introduced allows obtaining the decolorized glass with a reduced consumption of decolorizing agents compared to adding them in the first solid vitrifiable mixture used to produce the base melted glass, in which one or more decolorizing compounds are normally already included. Furthermore, the addition of the decolorizing agent to the first solid vitrifiable mixture used to produce the base melted glass could lead to non-optimal colourings of the products obtained with the melted glass flowing in the channels in which no recycled glass frit is added.

The colour of the glass of the final container is also caused by the oxidation state of the melted vitrifiable mixture fed to the forming machines. Advantageously, the oxidation state can be controlled by adding oxidizing agents (e.g. NaNO₃, KNO₃) and reducing agents (e.g. graphite, pyrite, carbon).

In one embodiment, for example, in order to reduce the green colour conveyed by the presence of iron oxides in the glass cullet, it is possible to add to the second solid vitrifiable mixture used for preparing the frit at least one oxidizing agent to bring the iron to its highest state of oxidation, which is associated with a yellow rather than green colour. In this case, the use of NaNO₃ as an oxidizing agent is particularly preferred.

In a preferred embodiment, the recycled glass frit according to the present description can have the following composition (percentages by weight referred to the weight of the frit):

| | |
|---|---|
| - 50-65% | SiO₂ |
| - 15-20% | Na₂O |
| - 0-3% | K₂O |
| - 7-12% | CaO |
| - 0-3% | MgO |
| - 0-3% | BaO |
| - 1-3% | Al₂O₃ |
| - 0.1-0.2% | SO₃ |
| - 0-3% | Li₂O |
| - 10-20% | B₂O₃ |
| - 0.03-0.07% | Fe₂O₃. |

The composition of the frit is preferably selected so that the viscosity curve thereof, i.e. the trend of the viscosity value (Log η) of the frit in the liquid state as its temperature varies, is similar to that of the melted vitrifiable mixture present in the channel.

The chemical-physical and composition characteristics of the frit can be selected taking into account various parameters, in particular the composition of the glass cullet, the temperature and rheological characteristics of the base melted glass in which the frit is incorporated, the advancement speed of the base melted glass and the length of the feeding channel travelled by it (which define the time within which the melting and homogenization of the frit must be completed).

The person skilled in the art, based on his technical knowledge and/or with the aid of routine experimental trials, is able to select the amount and type of fluxing agents and optional additive materials to obtain a recycled glass frit having an adequate melting and homogenization rate in the base melted vitrifiable mixture.

Preferably, the recycled glass frit has one or more of the following characteristics:
- melting temperature (Tₘ) within the range 1050-1250°C, preferably within the range 1160-1200°C (according to ISO 7884-3:1987; temperature value measured at Log η = 2, η expressed in Poise);
- softening temperature (Tₛ) within the range 550-650°C, preferably within the range 600-630°C (according to ISO 7884-3:1987; temperature value measured at Log η = 7.6, η expressed in Poise);
- annealing temperature (Tₘ) within the range 400-500°C, preferably within the range 460-490°C (according to ISO 7884-3:1987; temperature value measured at Log η = 13.3, η expressed in Poise);

Preferably, the recycled glass frit has density within the range 2.4 - 2.8 g/dm³, more preferably within the range 2.5 - 2.65 g/dm³.

The frit can be produced with equipment known to those skilled in the art.

For example, the frit can be obtained by a process comprising the steps of:
i. melting the second solid vitrifiable mixture comprising recycled glass cullet and at least one fluxing agent to obtain a second melted vitrifiable mixture;
ii. cooling the second melted vitrifiable mixture to obtain the recycled glass frit.

The second solid vitrifiable mixture in the aforesaid step i is preferably melted at a temperature within the range 1,000°C - 1,600°C, more preferably within the range 1,200°C - 1,500°C.

Cooling can be carried out by any suitable technique, including pouring the second melted vitrifiable mixture into water to obtain a frit in granular form and lamination between cooled rollers to obtain a frit in the form of flake.

At the end of the cooling (*quenching*), the frit can be ground to obtain a powder having the desired particle size.

Preferably, the frit incorporated in the base melted glass is formed by granules with average dimension within the range 1 mm - 5 mm. Preferably, the frit has a content equal to or lower than 2% by weight of granules with dimensions greater than 5 mm. Preferably, the glass cullet has a content of granules with dimensions lower than 1 mm equal to or lower than 5% by weight.

The recycled glass frit can be introduced into the melted glass mass flowing in the feeding channels in a variable amount within a wide range of values.

For example, the recycled glass frit can be added in amounts within the range 0.50 - 15% by weight with respect to the weight of the melted glass mass flowing in the feeding channel.

With the method according to the present description it is possible to introduce an amount of recycled glass cullet into a final glass container, for example, up to 15% by weight of the weight of the container.

The glass cullet frit can be combined with the melted vitrifiable mixture mass in the feeding channels by using conventional equipment for the dosage and homogenization thereof, in particular the apparatuses generally used for glass colouring in the channel (*coloring in forehearth*) by means of glass frits.

The melted vitrifiable mixture in which the frit has been included, through the feeding channels, is fed to the forming machines where the glass container is produced, for example by a glass blowing process. Each feeding channel is generally provided with a respective dosing device (*feeder*) for dosing a desired quantity of a drop of melted glass to a respective forming machine.

The container may be formed, for example, by blowing, press-blowing or any other suitable process. Once formed, the container is cooled to preserve the desired shape, then annealed in one or more annealing furnaces. The containers leaving the annealing treatment can be subjected to any finishing treatments, for example cutting, polishing or application of coatings (e.g. anti-reflective, reinforcing, decorative ones, etc.).

Preferably, the recycled glass container obtained with the method according to the present description is a container in the form of a bottle, flacon, jar, etc., for packaging, for example, perfumes, cosmetic products (creams, lotions, detergents, etc.), pharmaceutical products or food products. The packaged product can be in the form of liquid, cream, paste, powder, etc.

To further understand the characteristics of the present invention, the following embodiment is provided below.

### EXAMPLE 1

A recycled glass frit in accordance with the present invention was prepared starting from the following solid vitrifiable mixture (percentages by weight referred to the weight of the solid vitrifiable mixture):
- 70% of PCR glass cullet,
- 80 of lithium carbonate,
- 22% of anhydrous borax.

The PCR cullet was of the extra-flint quality (99.9% by weight of white and half-white soda-lime glass), with a content of Fe₂O₃ lower than 0.07% and of Cr₂O₃ lower than 0.002%, said percentages referring to the weight of the cullet.

The solid vitrifiable mixture was melted in a melting furnace and the melted mass was cooled in water. The frit obtained was ground and sieved in order to select the portion of granules with dimensions within the range 1 - 5 mm.

The following chemical-physical characteristics were determined on the frit thus prepared:
- Melting temperature = 1195°C
- Softening temperature = 620°C
- Annealing temperature = 480°C
- Density = 2.6 g/dm³
- Log p (02) = -1.95 bar.

In a melting furnace a base melted glass was prepared starting from a solid vitrifiable mixture comprising virgin raw materials and internal PIR cullet, free of PCR cullet.

The frit was incorporated in a feeding channel of a glass bottle forming machine for perfumery in an amount equal to 7% by weight with respect to the weight of the base melted glass that was flowing in the channel.

In this way, final glass containers consisting of 5% by weight of recycled glass were obtained.

## Claims

1. Method for producing a glass container comprising the steps of:
(a) melting a first solid vitrifiable mixture to obtain a first melted vitrifiable mixture;
(b) feeding the first melted vitrifiable mixture to a plurality of glass container forming machines through respective feeding channels;
(c) combining at least one recycled glass frit with the first melted vitrifiable mixture in at least one of the feeding channels, the frit being obtained from a second solid vitrifiable mixture comprising recycled glass cullet and at least one fluxing agent;
(d) forming a glass container in said forming machines using the melted vitrifiable mixture coming from step (c).

2. Method according to claim 1, wherein the recycled glass frit has one or more of the following characteristics:
- - Melting temperature within the range 1050 - 1250 °C, preferably within the range 1160-1200 °C;
- - Softening temperature within the range 550 - 650 °C, preferably within the range 600-630 °C;
- - Annealing temperature within the range 400 - 500 °C, preferably within the range 460 - 490 °C;
- - Density within the range 2.4 - 2.8 g/dm³, preferably within the range 2.5 - 2.65 g/dm³.

3. Method according to any one of claims 1-2, wherein said recycled glass frit comprises Fe₂O₃ in an amount lower than 0.1% by weight, preferably within the range 0.03% - 0.07% by weight, with respect to the frit weight.

4. Method according to any one of claims 1-3, wherein the recycled glass frit comprises an additive material selected from: vitrifying agent, stabilizing agent, colorizing agent, decolorizing agent, oxidizing agent, reducing agent, refining agent and mixtures thereof.

5. Method according to claim 4, wherein the recycled glass frit comprises at least one glass decolorizing agent.

6. Method according to claim 5, wherein said at least one glass decolorizing agent is selected from:
- oxides of one or more of the following elements: Co, Ce, Er, Mn;
- selenium, manganese
- mixtures thereof.

7. Method according to any one of claims 1-6, wherein said recycled glass frit is obtained by a process which comprises the steps of:
i. melting the second solid vitrifiable mixture comprising recycled glass cullet and at least one fluxing agent to obtain a second melted vitrifiable mixture;
ii. cooling the second melted vitrifiable mixture to obtain the recycled glass frit.

8. Method according to claim 7, wherein said second solid vitrifiable mixture comprises said recycled glass cullet in an amount within the range 500 - 90% by weight, preferably 600 - 80% by weight, with respect to the weight of the solid vitrifiable mixture.

9. Method according to any one of claims 6-7, wherein said second solid vitrifiable mixture comprises said at least one fluxing agent in an amount within the range 10% - 50% by weight, preferably 15% - 40% by weight, with respect to the weight of the solid vitrifiable mixture.

10. Method according to any one of claims 1-9, wherein said at least one fluxing agent is selected from:
- boric anhydride (B₂O₃);
- alkali metal oxides, preferably Li, Na and K oxides;
- carbonate salts of alkali metals, preferably carbonate salts of Li, Na and K;
- mixtures thereof.

11. Method according to any one of claims 1-10, which comprises incorporating in the first melted vitrifiable mixture coming from step (a) at least one frit, different from said recycled glass frit, comprising at least a compound selected from: colorizing agent, decolorizing agent, oxidizing agent, reducing agent and mixtures thereof.

12. Method according to any one of claims 1-11, wherein said recycled glass cullet is selected from: post-consumer glass cullet, post-industrial glass cullet and mixture thereof.

## Patentansprüche

1. Verfahren zur Herstellung eines Glasbehälters, umfassend die Schritte:
(a) Schmelzen einer ersten festen verglasbaren Mischung, um eine erste geschmolzene verglasbare Mischung zu erhalten;
(b) Zuführen der ersten geschmolzenen verglasbaren Mischung zu einer Vielzahl von Glasbehälterformmaschinen durch jeweilige Zuführkanäle;
(c) Kombinieren mindestens einer recycelten Glasfritte mit der ersten geschmolzenen verglasbaren Mischung in mindestens einem der Zuführkanäle, wobei die Fritte aus einer zweiten festen verglasbaren Mischung erhalten wird, die recycelten Glasbruch und mindestens ein Flussmittel umfasst;
(d) Formen eines Glasbehälters in den Formmaschinen unter Verwendung der geschmolzenen verglasbaren Mischung, die aus Schritt (c) stammt.

2. Verfahren nach Anspruch 1, wobei die recycelte Glasfritte eine oder mehrere der folgenden Eigenschaften aufweist:
- Schmelztemperatur im Bereich von 1050 - 1250 °C, vorzugsweise im Bereich von 1160 - 1200 °C;
- Erweichungstemperatur im Bereich 550 - 650 °C, vorzugsweise im Bereich 600-630 °C;
- Glühtemperatur im Bereich von 400 - 500 °C, vorzugsweise im Bereich von 460 - 490 °C;
- Dichte im Bereich 2,4 - 2,8 g/dm³, vorzugsweise im Bereich 2,5 - 2,65 g/dm³.

3. Verfahren nach einem der Ansprüche 1-2, wobei die recycelte Glasfritte Fe₂O ₃ in einer Menge von weniger als 0,1 Gew.- %, vorzugsweise im Bereich von 0,03 bis 0,07 Gew.- %, bezogen auf das Frittengewicht, umfasst.

4. Verfahren nach einem der Ansprüche 1-3, wobei die recycelte Glasfritte ein Zusatzmaterial umfasst, das ausgewählt ist aus: Verglasungsmittel, Stabilisierungsmittel, Färbemittel, Entfärbemittel, Oxidationsmittel, Reduktionsmittel, Läutermittel und Mischungen davon.

5. Verfahren nach Anspruch 4, wobei die recycelte Glasfritte mindestens ein Glasentfärbemittel umfasst.

6. Verfahren nach Anspruch 5, wobei das mindestens eine Glasentfärbemittel ausgewählt ist aus:
- Oxiden eines oder mehrerer der folgenden Elemente: Co, Ce, Er, Mn;
- Selen, Mangan
- Mischungen davon.

7. Verfahren nach einem der Ansprüche 1-6, wobei die recycelte Glasfritte durch ein Verfahren erhalten wird, das die folgenden Schritte umfasst:
i. Schmelzen der zweiten festen verglasbaren Mischung, die recycelten Glasbruch und mindestens ein Flussmittel umfasst, um eine zweite geschmolzene verglasbare Mischung zu erhalten;
ii. Abkühlen der zweiten geschmolzenen verglasbaren Mischung, um die recycelte Glasfritte zu erhalten.

8. Verfahren nach Anspruch 7, wobei die zweite feste verglasbare Mischung den recycelten Glasbruch in einer Menge im Bereich von 50 - 90 Gew.- %, vorzugsweise 60 - 80 Gew.- %, bezogen auf das Gewicht der festen verglasbaren Mischung, umfasst.

9. Verfahren nach einem der Ansprüche 6-7, wobei die zweite feste verglasbare Mischung das mindestens eine Flussmittel in einer Menge im Bereich von 10 - 50 Gew.- %, vorzugsweise 15 - 40 Gew.- %, bezogen auf das Gewicht der festen verglasbaren Mischung, umfasst.

10. Verfahren nach einem der Ansprüche 1-9, wobei das mindestens eine Flussmittel ausgewählt ist aus:
- Borsäureanhydrid (B₂O₃);
- Alkalimetalloxiden, vorzugsweise Li-, Na- und K-Oxide;
- Carbonatsalzen von Alkalimetallen, vorzugsweise Carbonatsalzen von Li, Na und K;
- Mischungen davon.

11. Verfahren nach einem der Ansprüche 1-10, das das Einarbeiten in die erste geschmolzene verglasbare Mischung aus Schritt (a) mindestens einer Fritte, die sich von der recycelten Glasfritte unterscheidet, umfasst, die mindestens eine Verbindung umfasst, die ausgewählt ist aus: Färbemittel, Entfärbemittel, Oxidationsmittel, Reduktionsmittel und Mischungen davon.

12. Verfahren nach einem der Ansprüche 1-11, wobei der recycelte Glasbruch ausgewählt ist aus: Post-Consumer-Glasbruch, Post-Industrial-Glasbruch und Mischungen davon.

## Revendications

1. Procédé de fabrication d'un récipient en verre comprenant les étapes suivantes:
(a) faire fondre un premier mélange vitrifiable solide pour obtenir un premier mélange vitrifiable fondu;
(b) acheminer le premier mélange vitrifiable fondu vers une pluralité de machines de formage de récipients en verre par des canaux d'alimentation respectifs;
(c) combiner au moins une fritte de verre recyclé avec le premier mélange vitrifiable fondu dans au moins un des canaux d'alimentation, la fritte étant obtenue à partir d'un second mélange vitrifiable solide comprenant du calcin de verre recyclé et au moins un fondant;
(d) former un récipient en verre dans lesdites machines de formage en utilisant le mélange vitrifiable fondu provenant de l'étape (c).

2. Procédé selon la revendication 1, dans lequel la fritte de verre recyclé présente une ou plusieurs des caractéristiques suivantes:
- Température de fusion comprise entre 1050 et 1250°C, de préférence entre 1160 et 1200°C;
- Température de ramollissement comprise entre 550 et 650°C, de préférence entre 600 et 630°C;
- Température de recuit comprise entre 400 et 500°C, de préférence entre 460 et 490°C;
- Densité comprise entre 2,4 et 2,8 g/dm³, de préférence entre 2,5 et 2,65 g/dm³.

3. Procédé selon l'une quelconque des revendications 1-2, dans lequel ladite fritte de verre recyclé comprend Fe₂O₃ dans une quantité inférieure à 0,1 % en poids, de préférence entre 0,03 % et 0,07 % en poids, par rapport au poids de la fritte.

4. Procédé selon l'une quelconque des revendications 1 à 3, dans lequel la fritte de verre recyclé comprend un additif choisi parmi : un agent vitrifiant, un agent stabilisant, un agent colorant, un agent de décoloration, un agent oxydant, un agent réducteur, un agent d'affinage et leurs mélanges.

5. Procédé selon la revendication 4, dans lequel la fritte de verre recyclé comprend au moins un agent de décoloration du verre.

6. Procédé selon la revendication 5, dans lequel ledit au moins un agent de décoloration du verre est choisi parmi:
- les oxydes d'un ou de plusieurs des éléments suivants : Co, Ce, Er, Mn;
- sélénium, manganèse
- leurs mélanges.

7. Procédé selon l'une quelconque des revendications 1 à 6, dans lequel ladite fritte de verre recyclé est obtenue par un procédé comprenant les étapes suivantes:
i. faire fondre le second mélange vitrifiable solide comprenant du calcin de verre recyclé et au moins un fondant pour obtenir un second mélange vitrifiable fondu;
ii. faire refroidir le second mélange vitrifiable fondu pour obtenir la fritte de verre recyclé.

8. Procédé selon la revendication 7, dans lequel ledit second mélange solide vitrifiable comprend ledit calcin de verre recyclé dans une proportion comprise entre 50 % et 90 % en poids, de préférence entre 60 % et 80 % en poids, par rapport au poids du mélange solide vitrifiable.

9. Procédé selon l'une quelconque des revendications 6 à 7, dans lequel le second mélange solide vitrifiable comprend au moins un fondant en quantité comprise entre 10 % et 50 % en poids, de préférence entre 15 % et 40 % en poids, par rapport au poids du mélange solide vitrifiable.

10. Procédé selon l'une quelconque des revendications 1 à 9, dans lequel ledit au moins un fondant est choisi parmi les suivants:
- anhydride borique (B₂O₃);
- oxydes de métaux alcalins, de préférence oxydes de Li, Na et K;
- les sels de carbonate de métaux alcalins, de préférence les sels de carbonate de Li, Na et K;
- leurs mélanges.

11. Procédé selon l'une quelconque des revendications 1 à 10, qui comprend l'incorporation dans le premier mélange vitrifiable fondu issu de l'étape (a) d'au moins une fritte, différente de ladite fritte de verre recyclé, comprenant au moins un composé choisi parmi: un agent colorant, un agent de décoloration, un agent oxydant, un agent réducteur et leurs mélanges.

12. Procédé selon l'une quelconque des revendications 1 à 11, dans lequel le calcin de verre recyclé est choisi parmi: le calcin de verre post-consommation, le calcin de verre post-industriel et leur mélange.
